# EUROPEAN PATENT SPECIFICATION

(11) **EP 1 736 968 B1**
(45) Date of publication and mention of the grant of the patent: **19.03.2008**
(21) Application number: 05256315.2
(22) Date of filing: 11.10.2005
(51) Int. Cl.: G11B 5/851

(54) **Enhanced oxygen non-stoichiometry compensation for thin films**
Verbesserte Kompensation nichtstöchiometrischen Sauerstoffes für dünne Filme
Compensation améliorée de non-stoechiométrie d' oxygène pour pellicules minces

(30) Priority: 24.06.2005 US 165663
(43) Date of publication of application: 27.12.2006
(73) Proprietor: Heraeus, Inc., Chandler AZ 85226 (US)
(72) Inventor: Racine, Michael Gene, Phoenix, AZ 85044 (US); Kennedy, Steven Roger, Chandler, AZ 85226 (US); Das, Anirban, Tempe, AZ 85283 (US); Cheng, Yuanda R., Phoenix, AZ 85048 (US)
(74) Representative: Hill, Justin John

(56) References cited:
- WO-A-20/05031713
- JP-A- 1 083 655
- JP-A- 60 151 842
- US-A- 5 976 326
- US-A1- 2005 058 855

## Description

### FIELD OF THE INVENTION

The present invention generally relates to sputter targets and, more particularly, relates to the compensation of oxygen non-stoichiometry in oxide-containing thin film magnetic media.

### BACKGROUND OF THE INVENTION

The process of DC magnetron sputtering is widely used in a variety of fields to provide thin film material deposition of a precisely controlled thickness and within narrow atomic fraction tolerances on a substrate, for example to coat semiconductors and/or to form films on surfaces of magnetic recording media. In one common configuration, a racetrack-shaped magnetic field is applied to the sputter target by placing magnets on the backside surface of the target. Electrons are trapped near the sputter target, improving argon ion production and increasing the sputtering rate. Ions within this plasma collide with a surface of the sputter target causing the sputter target to emit atoms from the sputter target surface. The voltage difference between the cathodic sputter target and an anodic substrate that is to be coated causes the emitted atoms to form the desired film on the surface of the substrate.

In the reactive sputtering process, the vacuum chamber partially filled with a chemically reactive gas atmosphere, and material which is sputtered off of the target chemically reacts with the reactive species in the gas mixture to form a chemical compound which forms the film.

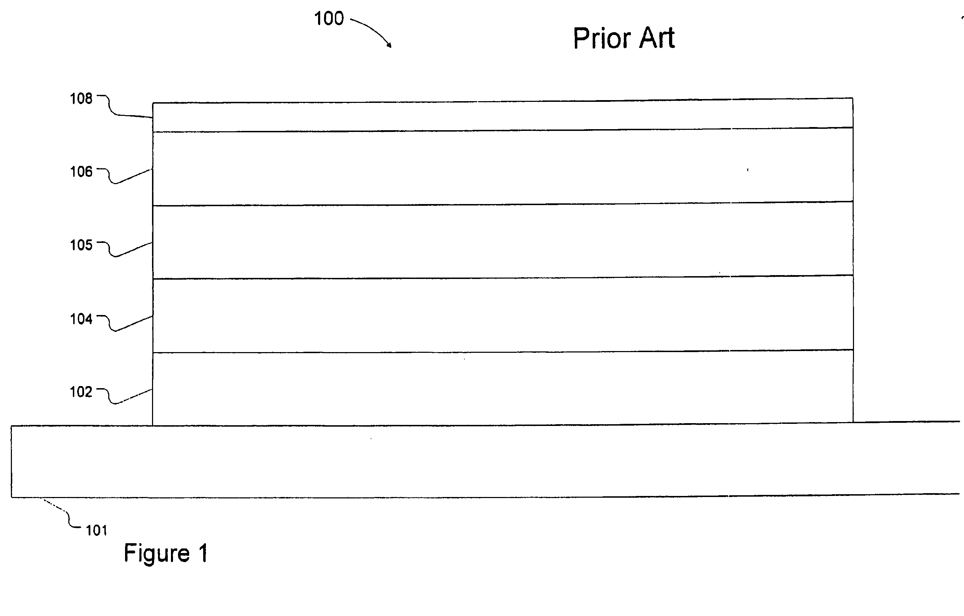

During the production of conventional magnetic recording media, layers of thin films are sequentially sputtered onto a substrate by multiple sputter targets, where each sputter target is comprised of a different material, resulting in the deposition of a thin film "stack." Figure 1 illustrates a typical thin film stack for conventional magnetic recording media. At the base of the stack is non-magnetic substrate 101, which is typically aluminum or glass. Seed layer 102, the first deposited layer, forces the shape and orientation of the grain structure of higher layers, and is commonly comprised of NiP or NiAl. Next, non-magnetic underlayer 104, which often includes one to three discrete layers, is deposited, where the underlayer is typically a chromium-based alloy, such as CrMo, or CrTi. Interlayer 105, which includes one or two separate layers, is formed above underlayer 104, where interlayer 105 is cobalt-based and lightly magnetic. Magnetic data-storing layer 106, which may include two or three separate layers, is deposited on top of interlayer 105, and carbon lubricant layer 108 is formed over magnetic layer 106.

The amount of data that can be stored per unit area on a magnetic recording medium is directly related to the metallurgical characteristics and the composition of the data-storing layer and, correspondingly, to the sputter target material from which the data-storing layer is sputtered. The key to achieving low media noise performance and high thermal stability is to provide overlayer 106 with a well-isolated fine grain structure coupled with large perpendicular magnetic anisotropy, or *Kᵤ.*

Recent initiatives have shown some improvement in achieving isolated grain structures and large Kᵤ values in certain oxygen containing magnetic media. Oxygen containing CoCrPt or CoPt-based media not only provide a better grain-to-grain separation via an oxygen rich grain boundary phase, but they also suppress degradation of *Kᵤ* without interfering with the epitaxial growth of the media. Oxides having little solid solubility in metals often get precipitated into grain boundary regions. Microstructural, magnetic and electrical separation of grains are key parameters in realizing discrete magnetic domains with little cross-talk and a high signal-to-noise ratio ("SNR").

Since the presence of an oxygen-rich grain boundary helps separate the magnetic grain boundaries and assists grain size refinement and segregation, it is important to achieve an oxygen content in the grain boundary region, in the appropriate amount and proportion. If the oxygen content is too low, grain segregation is inadequate, resulting in low coercivity ("H_{c}") and poor SNR performance. A modest oxygen incorporation in the film promotes Cr-O formation in the grain boundary, and resulting in significant improvement in H_{c} and recording performance.

If the oxygen content is too high, the excess oxygen deposits in the core of the grains, decreasing H_{c} and saturation magnetization ("Mₛ"), and adversely affecting the media resolution. Additionally, any oxygen non-stoichiometry for oxides contained in grain boundary regions also results in electrical conduction between magnetic grains, where stoichiometry is achieved when the ratio of moles of the oxide balances with the ratio of moles in the metal, according to their stoichiometric oxide chemical formula. In more detail, with oxygen non-stoichiometry, electron or hole conduction compensates for cation/anion vacancies, which is also a function of the oxygen partial pressure during media processing. Upon interacting with an applied magnetic field during magnetron sputtering, this electrical conduction adversely affects the magnetic performance of the media as well as the sputter performance of the targets.

Although a metal oxide may be stoichiometric within a sputter target, due to inherent characteristics of the sputtering process, small oxygen losses may occur, resulting in the metal oxide depositing as a thin film in non-stoichiometric proportions. It is therefore considered desirable to provide optimal oxygen content in the grain boundary region to achieve improved magnetic performance for granular magnetic media applications. In particular, it is desirable to provide for stoichiometric amounts of oxygen within the oxide-containing grain boundaries of magnetic recording media by compensating for oxygen non-stoichiometry during the sputtering process.

### SUMMARY OF THE INVENTION

The present invention generally relates to sputter targets and, more particularly, relates to the compensation of oxygen non-stoichiometry in oxide-containing thin film magnetic media.

According to one arrangement, the present invention is a method of manufacturing a magnetic recording medium, including the step of non-reactively sputtering at least a first data storing thin film layer over a substrate from a sputter target. The sputter target is comprised of cobalt (Co), platinum (Pt), a first metal oxide further comprised of a first metal and oxygen (O), and a second metal oxide. The first data storing thin film layer is comprised of cobalt (Co), platinum (Pt), and a stoichiometric third metal oxide comprising the first metal and oxygen (O). During sputtering, any non-stoichiometry of the third metal oxide in the first data storing thin film layer is compensated for using oxygen (O) from the second metal oxide in the sputter target.

The methods of manufacturing metal oxide-containing recording media having stoichiometric amounts of oxygen are applicable to the production of a wide variety of oxide containing granular magnetic media, such as perpendicular magnetic recording ("PMR") media and horizontal magnetic recording media.

The first metal oxide is a single component metal oxide. The first metal is selected from boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn), although the use of other metals is also contemplated.

Stoichiometric proportions are produced by compensating oxygen from sputter targets during reactive or non-reactive sputtering. Since the oxygen-compensated metal oxide component of the magnetic recording medium is a single component metal oxide or a multi-component metal oxide, the stoichiometric metal oxide in either the single component or a multi-component metal oxide containing film will have the metal or metals and oxygen in the exact atomic ratios as indicated by their molecular formula. Accordingly, any non-stoichiometric single or multi-component metal oxide can be characterized by either excess or deficiency of oxygen (O) with respect to the metal, as indicated by their stoichiometric molecular formula.

The second metal oxide is further comprised of a second metal and oxygen (O). The second metal is selected from chromium (Cr), boron (B), cobalt (Co), and platinum (Pt), although other metals are also desirable. The second metal oxide is comprised of greater than 0 and up to 16 mole percent oxygen (O), however more oxygen can be used if desired. The sputter target is further comprised of chromium (Cr) and/or boron (B), although these metals may also be omitted.

According to a second arrangement, the present invention is a method of manufacturing a magnetic recording medium, including the step of non-reactively sputtering at least a first data storing thin film layer over a substrate from a sputter target. The sputter target is comprised of cobalt (Co), platinum (Pt), a first metal oxide further comprised of a plurality of metals and oxygen (O), and a second metal oxide. The first data storing thin film layer is comprised of cobalt (Co), platinum (Pt), and a stoichiometric third metal oxide including at least one of the plurality of metals and oxygen (O). During sputtering, any non-stoichiometry of the third metal oxide in the first data storing thin film layer is compensated for using oxygen (O) from the second metal oxide in the sputter target.

The first metal oxide is a multi-component metal oxide. At least one of the plurality of metals is selected from boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

According to a third arrangement, the present invention is a method of manufacturing a magnetic recording medium, comprising the step of non-reactively sputtering at least a first data storing thin film layer over a substrate from a sputter target. The sputter target is comprised of cobalt (Co), platinum (Pt), a first metal, a second metal, and a first metal oxide. The first data storing thin film layer is comprised of cobalt (Co), platinum (Pt), and a stoichiometric second metal oxide comprising the first metal, the second metal and oxygen (O). During sputtering, any non-stoichiometry of the second metal oxide in the first data storing thin film layer is compensated for using oxygen (O) from the first metal oxide in the sputter target.

The first metal and/or the second metal are selected from boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn). The first metal oxide is further comprised of a third metal and oxygen (O), where the third metal is selected from chromium (Cr), boron (B), cobalt (Co), and platinum (Pt).

According to a fourth arrangement, the present invention is a method of manufacturing a magnetic recording medium, including the step of reactively sputtering at least a first data storing thin film layer over a substrate from a sputter target in an oxygen-rich gas atmosphere. The sputter target is comprised of cobalt (Co), platinum (Pt), and a single component, first metal oxide comprising a first metal and oxygen (O). The first data storing thin film layer is comprised of cobalt (Co), platinum (Pt), and a stoichiometric second metal oxide comprising the first metal and oxygen (O). During sputtering, any non-stoichiometry of the second metal oxide in the first data storing thin film layer is compensated for using oxygen (O) from the oxygen-rich gas atmosphere.

The oxygen-rich gas atmosphere is comprised of greater than 0 and up to 50 volume percent oxygen (O), although more oxygen can be used in the reactive sputtering process if desired.

According to a fifth arrangement, the present invention is a method of manufacturing a magnetic recording medium, comprising the step of reactively sputtering at least a first data storing thin film layer over a substrate from a sputter target in an oxygen-rich gas atmosphere. The sputter target is comprised of cobalt (Co), platinum (Pt), and a multi-component, first metal oxide comprising at least first and second metals and oxygen (O). The first data storing thin film layer is comprised of cobalt (Co), platinum (Pt), and a stoichiometric second metal oxide comprising at least the first metal and oxygen (O). During sputtering, any non-stoichiometry of the second metal oxide in the first data storing thin film layer is compensated for using oxygen (O) from the oxygen-rich gas atmosphere.

In the following description of the preferred embodiment, reference is made to the accompanying drawings that form a part thereof, and in which is shown by way of illustration a specific embodiment in which the invention may be practiced. It is to be understood that other embodiments may be utilized and changes may be made without departing from the scope of the present invention.

### BRIEF DESCRIPTION OF THE DRAWINGS

Referring now to the drawings in which like reference numbers represent corresponding parts throughout.

Figure 1 depicts a typical thin film stack for conventional magnetic recording media;

Figure 2 depicts a method for manufacturing a magnetic recording medium according to one example embodiment of the present invention; and

Figure 3 depicts a thin film stack produced by the Figure 2 manufacturing process.

### DETAILED DESCRIPTION OF THE INVENTION

The present invention provides for increased data storage of a magnetic recording medium through the manufacture of thin film magnetic recording media containing metal oxides, where the metal oxides provide a beneficial oxygen content in the oxide-containing grain boundary region. Proper oxygen levels are achieved by compensating oxygen non-stoichiometry, or oxygen deficiencies, in the thin film media by incorporating additional oxygen in the sputter target, or reactive sputtering the sputter target in an oxygen-containing environment or atmosphere.

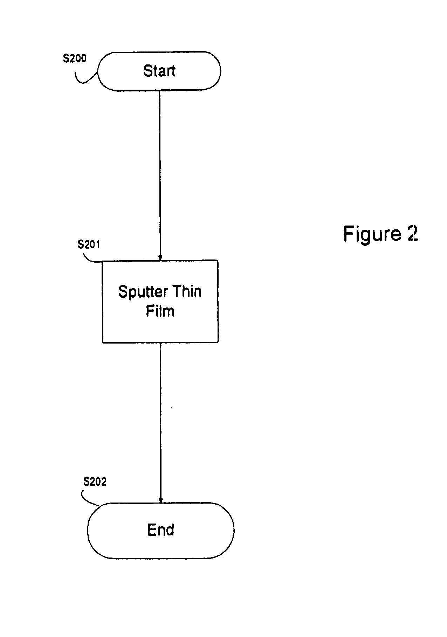

Figure 2 depicts a method for manufacturing a magnetic recording medium according to one example embodiment of the present invention. Briefly, the method includes the step of sputtering at least a first data storing thin film layer over a substrate from a sputter target.

In more detail, the process begins (step S200), and at least a first data storing thin film layer is sputtered over a substrate from a sputter target (step S201), and the process ends (step S202). The methods of manufacturing metal oxide-containing recording media having stoichiometric amounts of oxygen are applicable to the production of a wide variety of oxide containing granular magnetic media, such as perpendicular magnetic recording ("PMR") media and horizontal magnetic recording media.

Typically, small oxygen losses may occur during the sputtering process, where sputter targets which contain a stoichiometric metal oxide deposit non-stoichiometric metal oxide thin films. As an example, it may be desirable to provide a thin film layer composed of Co-12Cr-14Pt-8SiO₂, however a sputter target formulated of stoichiometric Co-12Cr-14Pt-8SiO₂ may yield a non-stoichiometric thin film, such as Co-12Cr-14Pt-8SiO_{1.8}. The present invention compensates for thin film metal oxide non-stoichiometry, using oxygen (O) provided in a supplemental metal oxide in the sputter target during non-reactive sputtering, or using oxygen (O) provided in the oxygen-rich gas atmosphere during reactive sputtering. In the above example, a supplemental metal oxide, such as CoO, PtO, or CrO is added to Co-12Cr-14Pt-8SiO₂, where the deposited metal oxide compensates for non-stoichiometry using oxygen (O) from the supplemental metal oxide.

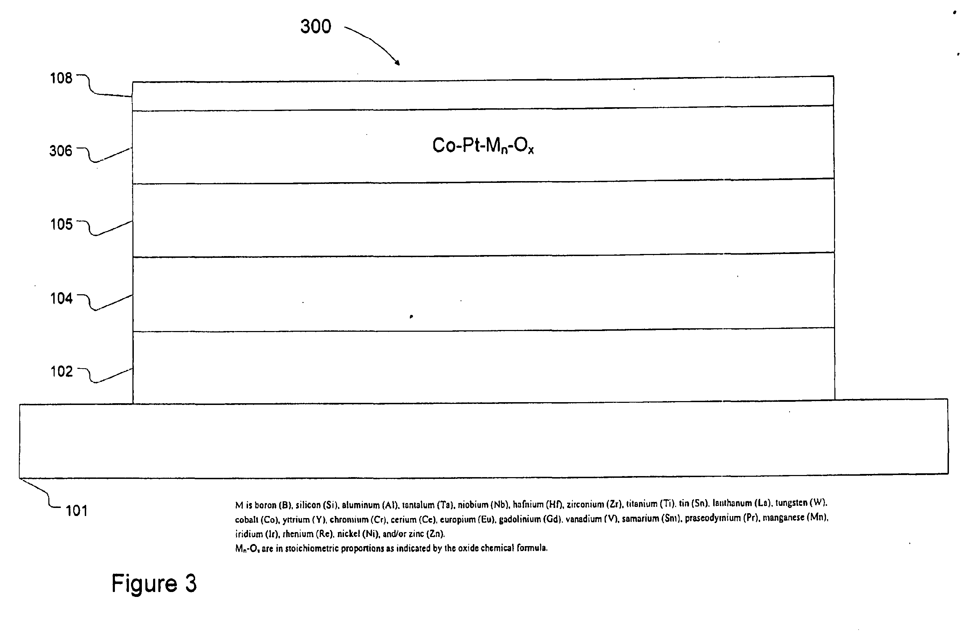

The sputtering process (step S201) is performed using a variety of approaches. For example, in several approaches the first data storing thin film layer (depicted as magnetic data storing layer 306 in Figure 3) is non-reactively sputtered. According to one example arrangement, the first data storing thin film layer is non-reactively sputtered, where the sputter target is comprised of cobalt (Co), platinum (Pt), a first metal oxide further comprised of a first metal and oxygen (O), and a second metal oxide. The first data storing thin film layer is comprised of cobalt (Co), platinum (Pt), and a stoichiometric third metal oxide comprising the first metal and oxygen (O). During sputtering, any non-stoichiometry of the third metal oxide in the first data storing thin film layer is compensated for using oxygen (O) from the second metal oxide in the sputter target.

The present invention provides for the compensation of oxygen non-stoichiometry in oxygen-containing grain boundary regions of thin film magnetic media, using sputter targets containing additional oxygen which complements oxygen non-stoichiometry in the media reactive or non-reactive sputtering. Accordingly, magnetic films which contain stoichiometric oxygen in the boundary region can be produced, benefiting the further optimization of granular media magnetic performance.

In one example, where the metal oxide is chromium oxide, a metal oxide comprised of Cr₂O₃ is representative of a stoichiometric oxide of Cr, whereas Cr₂O_{2.9} and Cr₂O_{3.1} are metal oxides of Cr which are oxygen deficient and oxygen excessive, respectively.

Controlling the amount of oxygen incorporated in the grain boundary region, via a single or multi-component oxide or oxides, benefits magnetic properties related to H_{c} and Mₛ, and improves grain refinement and separation. Specifically, oxygen is incorporated to compensate for oxygen non-stoichiometry in substantially optimized molar contents within the grain boundary regions of magnetic thin film media that can contain single or multi-component oxides.

The first metal oxide is a single component metal oxide. The first metal is selected from boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn), although the use of other metals is also contemplated.

The second metal oxide is further comprised of a second metal and oxygen (O). The second metal is selected from chromium (Cr), boron (B), cobalt (Co), and platinum (Pt), although other metals are also desirable. The second metal oxide is comprised of greater than 0 and up to 16 mole percent oxygen (O), however more oxygen can be used if desired. The sputter target is further comprised of chromium (Cr) and/or boron (B), although these metals may also be omitted.

Stoichiometric proportions of metal and oxygen components within a metal oxide containing grain boundary are characterized by defined chemical proportions of oxygen with respect to the metallic components in the media, relative to the molecular formula of the oxide. Example stoichiometries for metal oxides include, SiO₂, TiO₂, Nb₂O₅, WO₃, CoO, ZrO₂, Cr₂O₃, Y₂O₃ and Ta₂O₅. Stoichiometries for a variety of other oxides useful in the recording media and methods of the invention are well known to those skilled in the art.

Alternatively, according to a second arrangement, the first data storing thin film layer is non-reactively sputtered, where the sputter target is comprised of cobalt (Co), platinum (Pt), a first metal oxide further comprised of a plurality of metals and oxygen (O), and a second metal oxide. The first data storing thin film layer is comprised of cobalt (Co), platinum (Pt), and a stoichiometric third metal oxide including at least one of the plurality of metals and oxygen (O). During sputtering, any non-stoichiometry of the third metal oxide in the first data storing thin film layer is compensated for using oxygen (O) from the second metal oxide in the sputter target.

The first metal oxide is a multi-component metal oxide. At least one of the plurality of metals is selected from boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

Stoichiometric proportions are produced by compensating oxygen from sputter targets during reactive or non-reactive sputtering. Since the oxygen-compensated metal oxide component of the magnetic recording medium is a single component metal oxide or a multi-component metal oxide, the stoichiometric metal oxide in either the single component or a multi-component metal oxide containing film will have the metal or metals and oxygen in the exact atomic ratios as indicated by their molecular formula. Accordingly, any non-stoichiometric single or multi-component metal oxide can be characterized by either excess or deficiency of oxygen (O) with respect to the metal, as indicated by their stoichiometric molecular formula.

In a third alternative arrangement, the first data storing thin film layer is non-reactively sputtered, where the sputter target is comprised of cobalt (Co), platinum (Pt), a first metal, a second metal, and a first metal oxide. The first data storing thin film layer is comprised of cobalt (Co), platinum (Pt), and a stoichiometric second metal oxide comprising the first metal, the second metal and oxygen (O). During sputtering, any non-stoichiometry of the second metal oxide is compensated for using oxygen (O) from the first metal oxide in the sputter target.

The first metal and/or the second metal are selected from boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn). The first metal oxide is further comprised of a third metal and oxygen (O), where the third metal is selected from chromium (Cr), boron (B), cobalt (Co), and platinum (Pt).

In additional arrangements, the first data storing thin film layer is reactively sputtered in an oxygen-rich gas atmosphere. If, upon sputtering, a sputter target containing the same desired composition during reactive or non-reactive sputtering yields a thin film comprised of a metal oxide with a chemical formula of MO₁₋ₓ, which is indicative of oxygen deficiency in the media, instead of stoichiometric MO, this oxygen deficiency can be compensated by providing additional oxygen in the targets during reactive in oxygen containing environment or non-reactive sputtering.

According to one such arrangement, the first data storing layer is reactively sputtered in an oxygen-rich gas atmosphere, where the sputter target is comprised of cobalt (Co), platinum (Pt), and a single component, first metal oxide comprising a first metal and oxygen (O). The first data storing thin film layer is comprised of cobalt (Co), platinum (Pt), and a stoichiometric second metal oxide comprising the first metal and oxygen (O). During sputtering, any non-stoichiometry of the second metal oxide in the first data storing thin film layer is compensated for using oxygen (O) from the oxygen-rich gas atmosphere.

The oxygen-rich gas atmosphere is comprised of greater than 0 and up to 50 volume percent oxygen (O), although more oxygen can be used in the reactive sputtering process if desired.

In another such arrangement, at least a first data storing thin film layer is reactively sputtered in an oxygen-rich gas atmosphere. The sputter target is comprised of cobalt (Co), platinum (Pt), and a multi-component, first metal oxide comprising at least first and second metals and oxygen (O). The first data storing thin film layer is comprised of cobalt (Co), platinum (Pt), and a stoichiometric second metal oxide comprising at least the first metal and oxygen (O). During sputtering, any non-stoichiometry of the second metal oxide in the first data storing thin film layer is compensated for using oxygen (O) from the oxygen-rich gas atmosphere.

Figure 3 depicts a thin film stack produced by the Figure 2 manufacturing process. Briefly, at the base of the stack is non-magnetic substrate 101, and seed layer 102, the first deposited layer, forces the shape and orientation of the grain structure of higher layers. Non-magnetic underlayer 104 is provided, where the underlayer is typically a chromium-based alloy, such as CrMo, or CrTi. Interlayer 105, which includes one or two separate layers, is formed above underlayer 104, where interlayer 105 is cobalt-based and lightly magnetic. At least first data storing thin film layer 306, is deposited on top of interlayer 105, and carbon lubricant layer 108 is formed over first data storing thin film layer 306.

In more detail, data storing thin film layer 306 is formed over the substrate 101, where data storing thin film layer 306 further includes cobalt (Co), platinum (Pt), and a stoichiometric metal oxide. The first metal oxide is a single component metal oxide. The first metal is selected from boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn), although the use of other metals is also contemplated.

The second metal oxide is further comprised of a second metal and oxygen (O). The second metal is selected from chromium (Cr), boron (B), cobalt (Co), and platinum (Pt), although other metals are also desirable. The second metal oxide is comprised of greater than 0 and up to 16 mole percent oxygen (O), however more oxygen can be used if desired. The sputter target is further comprised of chromium (Cr) and/or boron (B), although these metals may also be omitted.

The data-storing thin film layer is comprised of Co, greater than 0 and as much as 24 atomic percent Cr, greater than 0 and as much as 20 atomic percent Pt, greater than 0 and as much as 20 atomic percent B, and greater than 0 and as much as 10 mole percent of the metal oxide.

Where the metal oxide component of the magnetic recording medium is a single component metal oxide, the stoichiometry between the metal and the oxygen (O) the thin film single metal oxide formulations of the invention is in stoichiometric proportions as indicated by their chemical formula. The oxide formulation of these metals is, for example, B₂O₃, SiO₂, Al₂O₃, Ta₂O₅, Nb₂O₅, HfO₂, ZrO₂, TiO₂, SnO₂, La₂O₃, WO₃, CoO, Y₂O₃, Cr₂O₃, CeO₂, Eu₂O₃, Gd₂O₃, V₂O₅, SmO₂, Pr₂O₃, MnO₂, IrO₂, ReO₂,NiO, or ZnO, although other single component metal oxides are contemplated.

Alternatively, the first metal oxide is a multi-component metal oxide, where at least one of the plurality of metals is selected from boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

Where the metal oxide component of the magnetic recording medium is comprised of a multi-component metal oxide, the different metals and oxygen are in the stoichiometric ratios of their respective oxide chemical formulae. The number of metals in a multi-component oxide is at least two. Exemplary multi-component oxides include TiO₂-SiO₂, Ta₂O₅-SiO₂, Al₂O₃-SiO₂, HfO₂-SiO₂, Ta₂O₅-TiO₂, although other multi-component oxides are contemplated.

The methods of the invention compensate for oxygen non-stoichiometry in a thin film of the invention by sputtering using a sputter target containing an oxide corresponding to a base metal or alloy of the thin film system. For example, an oxide used in the sputtering procedure can comprise a metal oxide corresponding to any of the metals in the alloy component, CoPt or CoCrPt and include CoO, PtO and/or CrO. As described above, oxygen non-stoichiometry for multi-component metal oxide formulations of the invention also can be compensated using an metal oxide corresponding to one or more of the metal oxides to include in the multi-component thin film.

In summary, the present invention ensures the compensation of oxygen non-stoichiometry in oxygen-containing grain boundary regions of thin film magnetic media during sputtering, or by the use of sputter targets. In media containing single component oxides, the oxygen required to form a data storing thin film layer comprised of a stoichiometric metal oxide is obtained by sputtering CoPt targets containing the metal oxide in conjunction with CrO, CoO, PtO, and/or BO, or by reactive sputtering of CoPt-targets containing oxygen in an ArO₂ environment.

In media containing multi-component oxides for enhanced matrix properties, the oxygen required to form a data storing thin film layer comprised of stoichiometric multi-component oxides is obtained by sputtering CoPt targets containing non-stoichiometric multi-component metal oxides in conjunction with CrO, CoO, PtO and/or BO, or reactive sputtering CoPt multi-component oxide containing targets which contain non-stoichiometric oxygen, in an ArO₂ environment. Other methods which achieve these goals include sputtering CoPt targets containing individual or combinations of the metals in elemental form, in conjunction with CrO, CoO, PtO and/or BO, sputtering CoPt targets containing individual or combination of the plurality of metals in elemental form in conjunction with CrO, CoO, PtO, and/or BO and the oxides of those metals which are not present in elemental forms in the target, or reactive sputtering CoPt targets which contain the multiple metals, in an ArO₂ environment.

Using the present invention, magnetic films containing stoichiometric oxygen in the grain boundary regions will be processed, helping to realize the granular media magnetic performance required for PMR.

## Claims

1. A method of manufacturing a magnetic recording medium, comprising the step of non-reactively sputtering at least a first data storing thin film layer over a substrate from a sputter target,
wherein the sputter target is comprised of cobalt (Co), platinum (Pt), a first metal oxide further comprised of a first metal and oxygen (O), and a second metal oxide,
wherein the first data storing thin film layer is comprised of cobalt (Co), platinum (Pt), and a stoichiometric third metal oxide comprising the first metal and oxygen (O),
wherein, during sputtering, any non-stoichiometry of the third metal oxide in the first data storing thin film layer is compensated for using oxygen (O) from the second metal oxide in the sputter target, and
wherein stoichiometric amounts of oxygen are provided within oxide-containing grain boundaries of the magnetic recording medium.

2. The method of manufacturing a magnetic recording medium according to Claim 1, wherein the first metal oxide is a single component metal oxide.

3. The method of manufacturing a magnetic recording medium according to Claim 1, wherein the first metal is selected from the group consisting of boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

4. The method of manufacturing a magnetic recording medium according to Claim 1, wherein the first metal oxide is further comprised of a third metal.

5. The method of manufacturing a magnetic recording medium according to Claim 4, wherein the first metal oxide is a multi-component metal oxide.

6. The method of manufacturing a magnetic recording medium according to Claim 4, wherein the first metal is selected from the group consisting of boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

7. The method of manufacturing a magnetic recording medium according to Claim 1 or Claim 4,
wherein the second metal oxide is further comprised of a second metal and oxygen (O), and
wherein the second metal is selected from the group consisting of chromium (Cr), boron (B), cobalt (Co), and platinum (Pt).

8. The method of manufacturing a magnetic recording medium according to Claim 1 or Claim 4, wherein said second metal oxide is comprised of greater than 0 and up to 16 mole percent oxygen (O).

9. The method of manufacturing a magnetic recording medium according to Claim 1 or Claim 4, wherein the sputter target is further comprised of chromium (Cr).

10. The method of manufacturing a magnetic recording medium according to Claim 1 or Claim 4. wherein the sputter target is further comprised of boron (B).

11. The method of manufacturing a magnetic recording medium according to Claim 1 or Claim 4, wherein the second metal oxide comprises a second metal and oxygen (O), and the second metal is selected from the group consisting of boron (B), cobalt (Co) and platinum (Pt).

12. The method of manufacturing a magnetic recording medium according to Claim 1 or Claim 4, wherein the first metal is selected from the group consisting of boron (B), silicon (Si), tantalum (Ta), niobium (Nb), titanium (Ti), tin (Sn), lanthanum (La), cobalt (Co), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

13. The method of manufacturing a magnetic recording medium according to Claim 1 or Claim 4, wherein the first metal is selected from the group consisting of boron (B), niobium (Nb), tin (Sn), lanthanum (La), cobalt (Co), europium (Eu), gadolinium (Gd), vanadium (V), samarium (Sm), praseodymium (Pr), manganese (Mn), iridium (Ir), rhenium (Re), and zinc (Zn).

14. A method of manufacturing a magnetic recording medium, comprising the step of non-reactively sputtering at least a first data storing thin film layer over a substrate from a sputter target,
wherein the sputter target is comprised of cobalt (Co), platinum (Pt), a first metal, a second metal, and a first metal oxide,
wherein the first data storing thin film layer is comprised of cobalt (Co), platinum (Pt), and a stoichiometric second metal oxide comprising the first metal, the second metal and oxygen (O),
wherein, during sputtering, any non-stoichiometry of the second metal oxide in the first data storing thin film layer is compensated for using oxygen (O) from the first metal oxide in the sputter target, and
wherein stoichiometric amounts of oxygen are provided within oxide-containing grain boundaries of the magnetic recording medium.

15. The method of manufacturing a magnetic recording medium according to Claim 14, wherein the first metal and/or said second metal are selected from the group consisting of boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

16. The method of manufacturing a magnetic recording medium according to Claim 14,
wherein the first metal oxide is further comprised of a third metal and oxygen (O), and
wherein said third metal is selected from the group consisting of chromium (Cr), boron (B), cobalt (Co), and platinum (Pt).

17. The method of manufacturing a magnetic recording medium according to Claim 14, wherein the sputter target is further comprised of chromium (Cr).

18. The method of manufacturing a magnetic recording medium according to Claim 14, wherein the sputter target is further comprised of boron (B).

19. The method of manufacturing a magnetic recording medium according to Claim 14, wherein the first metal and/or the second metal are selected from the group consisting of boron (B), silicon (Si), tantalum (Ta), niobium (Nb), titanium (Ti), tin (Sn), lanthanum (La), cobalt (Co), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

20. The method of manufacturing a magnetic recording medium according to Claim 14, wherein the first metal and/or the second metal are selected from the group consisting of boron (B), niobium (Nb), tin (Sn), lanthanum (La), cobalt (Co), europium (Eu), gadolinium (Gd), vanadium (V), samarium (Sm), praseodymium (Pr), manganese (Mn), iridium (Ir), rhenium (Re), and zinc (Zn).

21. A method of manufacturing a magnetic recording medium, comprising the step of reactively sputtering at least a first data storing thin film layer over a substrate from a sputter target in an oxygen-rich gas atmosphere,
wherein the sputter target is comprised of cobalt (Co), platinum (Pt), and a single component, first metal oxide comprising a first metal and oxygen (O),
wherein the first data storing thin film layer is comprised of cobalt (Co), platinum (Pt), and a stoichiometric second metal oxide comprising the first metal and oxygen (O),
wherein, during sputtering, any non-stoichiometry of the second metal oxide in the first data storing thin film layer is compensated for using oxygen (O) from the oxygen-rich gas atmosphere, and
wherein stoichiometric amounts of oxygen are provided within oxide-containing grain boundaries of the magnetic recording medium.

22. The method of manufacturing a magnetic recording medium according to Claim 21, wherein the oxygen-rich gas atmosphere is comprised of greater than 0 and up to 50 volume percent oxygen (O).

23. The method of manufacturing a magnetic recording medium according to Claim 21, wherein the first metal is selected from the group consisting of boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

24. The method of manufacturing a magnetic recording medium according to Claim 21,
wherein the second metal oxide is further comprised of a second metal and oxygen (O), and
wherein the second metal is selected from the group consisting of chromium (Cr), boron (B), cobalt (Co), and platinum (Pt).

25. The method of manufacturing a magnetic recording medium according to Claim 21, wherein the sputter target is further comprised of chromium (Cr).

26. The method of manufacturing a magnetic recording medium according to Claim 21, wherein the sputter target is further comprised of boron (B).

27. The method of manufacturing a magnetic recording medium according to Claim 21, wherein the first metal is selected from the group consisting of boron (B), silicon (Si), tantalum (Ta), niobium (Nb), titanium (Ti), tin (Sn), lanthanum (La), cobalt (Co), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

28. The method of manufacturing a magnetic recording medium according to Claim 21, wherein the first metal is selected from the group consisting of boron (B), niobium (Nb), tin (Sn), lanthanum (La), cobalt (Co), europium (Eu), gadolinium (Gd), vanadium (V), samarium (Sm), praseodymium (Pr), manganese (Mn), iridium (Ir), rhenium (Re), and zinc (Zn).

29. A method of manufacturing a magnetic recording medium, comprising the step of reactively sputtering at least a first data storing thin film layer over a substrate from a sputter target in an oxygen-rich gas atmosphere,
wherein the sputter target is comprised of cobalt (Co), platinum (Pt), and a multi-component, first metal oxide comprising at least first and second metals and oxygen (O),
wherein the first data storing thin film layer is comprised of cobalt (Co), platinum (Pt), and a stoichiometric second metal oxide comprising at least the first metal and oxygen (O),
wherein, during sputtering, any non-stoichiometry of the second metal oxide in the first data storing thin film layer is compensated for using oxygen (O) from the oxygen-rich gas atmosphere, and
wherein stoichiometric amounts of oxygen are provided within oxide-containing grain boundaries of the magnetic recording medium.

30. The method of manufacturing a magnetic recording medium according to Claim 29, wherein the oxygen-rich gas atmosphere is comprised of greater than 0 and up to 50 volume percent oxygen (O).

31. The method of manufacturing a magnetic recording medium according to Claim 29, wherein first metal and/or the second metal are selected from the group consisting of boron (B), silicon (Si), aluminum (Al), tantalum (Ta), niobium (Nb), hafnium (Hf), zirconium (Zr), titanium (Ti), tin (Sn), lanthanum (La), tungsten (W), cobalt (Co), yttrium (Y), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

32. The method of manufacturing a magnetic recording medium according to Claim 29,
wherein the second metal oxide is further comprised of a third metal and oxygen (O), and
wherein the third metal is selected from the group consisting of chromium (Cr), boron (B), cobalt (Co), and platinum (Pt).

33. The method of manufacturing a magnetic recording medium according to Claim 29, wherein the sputter target is further comprised of chromium (Cr).

34. The method of manufacturing a magnetic recording medium according to Claim 29, wherein the sputter target is further comprised of boron (B).

35. The method of manufacturing a magnetic recording medium according to Claim 29, wherein the first metal and/or the second metal are selected from the group consisting of boron (B), silicon (Si), tantalum (Ta), niobium (Nb), titanium (Ti), tin (Sn), lanthanum (La), cobalt (Co), chromium (Cr), cerium (Ce), europium (Eu), gadolinium (Gd), vanadium (V), samarium (Sm), praseodymium (Pr), manganese (Mn), iridium (Ir), rhenium (Re), nickel (Ni), and zinc (Zn).

36. The method of manufacturing a magnetic recording medium according to Claim 29, wherein the first metal and/or the second metal are selected from the group consisting of boron (B), niobium (Nb), tin (Sn), lanthanum (La), cobalt (Co), europium (Eu), gadolinium (Gd), vanadium (V), samarium (Sm), praseodymium (Pr), manganese (Mn), iridium (Ir), rhenium (Re), and zinc (Zn).

## Patentansprüche

1. Verfahren zum Herstellen eines magnetischen Aufzeichnungsmediums, umfassend den Schritt des nicht-reaktiven Sputterns von mindestens einer ersten Dünnfilmschicht zum Speichern von Daten über einem Substrat von einem Sputtertarget,
wobei das Sputtertarget Cobalt (Co), Platin (Pt), ein erstes Metalloxid, weiter umfassend ein erstes Metall und Sauerstoff (O), und ein zweites Metalloxid umfaßt, wobei die erste Dünnfilmschicht zum Speichern von Daten Cobalt (Co), Platin (Pt) und ein stöchiometrisches drittes Metalloxid, umfassend das erste Metall und Sauerstoff (O), umfaßt,
wobei während des Sputterns jedwede Nicht-Stöchiometrie des dritten Metalloxids in der ersten Dünnfilmschicht zum Speichern von Daten zur Verwendung von Sauerstoff (O) von dem zweiten Metalloxid in dem Sputtertarget kompensiert wird, und
wobei stöchiometrische Mengen von Sauerstoff innerhalb Sauerstoff-haltiger Korngrenzen des magnetischen Aufzeichnungsmediums bereitgestellt werden.

2. Verfahren zum Herstellen eines magnetischen Aufzeichnungsmediums gemäß Anspruch 1, wobei das erste Metalloxid eine einzelne Metalloxidkomponente ist.

3. Verfahren zum Herstellen eines magnetischen Aufzeichnungsmediums gemäß Anspruch 1, wobei das erste Metall aus der Gruppe, bestehend aus Bor (B), Silicium (Si), Aluminium (Al), Tantal (Ta), Niob (Nb), Hafnium (Hf), Zirkonium (Zr), Titan (Ti), Zinn (Sn), Lanthan (La), Wolfram (W), Cobalt (Co), Yttrium (Y), Chrom (Cr), Cer (Ce), Europium (Eu), Gadolinium (Gd), Vanadium (V), Samarium (Sm), Praseodymium (Pr), Mangan (Mn), Iridium (Ir), Rhenium (Re), Nickel (Ni) und Zink (Zn), ausgewählt ist.

4. Verfahren zum Herstellen eines magnetischen Aufzeichnungsmediums gemäß Anspruch 1, wobei das erste Metalloxid weiter ein drittes Metall umfaßt.

5. Verfahren zum Herstellen eines magnetischen Aufzeichnungsmediums gemäß Anspruch 4, wobei das erste Metalloxid ein Mehrkomponentenmetalloxidist.

6. Verfahren zum Herstellen eines magnetischen Aufzeichnungsmediums gemäß Anspruch 4, wobei das erste Metall aus der Gruppe, bestehend aus Bor (B), Silicium (Si), Aluminium (Al), Tantal (Ta), Niob (Nb), Hafnium (Hf), Zirkonium (Zr), Titan (Ti), Zinn (Sn), Lanthan (La), Wolfram (W), Cobalt (Co), Yttrium (Y), Chrom (Cr), Cer (Ce), Europium (Eu), Gadolinium (Gd), Vanadium (V), Samarium (Sm), Praseodymium (Pr), Mangan (Mn), Iridium (Ir), Rhenium (Re), Nickel (Ni) und Zink (Zn), ausgewählt ist.

7. Verfahren zum Herstellen eines magnetischen Aufzeichnungsmediums gemäß Anspruch 1 oder 4, wobei das zweite Metalloxid weiter ein zweites Metall und Sauerstoff (O) umfaßt, und
wobei das zweite Metall aus der Gruppe, bestehend aus Chrom (Cr), Bor (B), Cobalt (Co) und Platin (Pt), ausgewählt ist.

8. Verfahren zum Herstellen eines magnetischen Aufzeichnungsmediums gemäß Anspruch 1 oder 4, wobei das zweite Metalloxid mehr als 0 und bis zu 16 mol-% Sauerstoff (O) umfaßt.

9. Verfahren zum Herstellen eines magnetischen Aufzeichnungsmediums gemäß Anspruch 1 oder 4, wobei das Sputtertarget Chrom (Cr) umfaßt.

10. Verfahren zum Herstellen eines magnetischen Aufzeichnungsmediums gemäß Anspruch 1 oder Anspruch 4, wobei das Sputtergarget Bor (B) umfaßt.

11. Verfahren zum Herstellen eines magnetischen Aufzeichnungsmediums gemäß Anspruch 1 oder Anspruch 4, wobei das zweite Metalloxid ein zweites Metall und Sauerstoff (O) umfaßt, und das zweite Metall aus der Gruppe, bestehend aus Bor (B), Cobalt (Co) und Platin (Pt), ausgewählt ist.

12. Verfahren zum Herstellen eines magnetischen Aufzeichnungsmediums gemäß Anspruch 1 oder Anspruch 4, wobei das erste Metall aus der Gruppe, bestehend aus Bor (B), Silicium (Si), Tantal (Ta), Niob (Nb), Titan (Ti), Zinn (Sn), Lanthan (La), Cobalt (Co), Chrom (Cr), Cer (Ce), Europium (Eu), Gadolinium (Gd), Vanadium (V), Samarium (Sm), Praseodymium (Pr), Mangan (Mn), Iridium (Ir), Rhenium (Re), Nickel (Ni) und Zink (Zn), ausgewählt ist.

13. Verfahren zum Herstellen eines magnetischen Aufzeichnungsmediums gemäß Anspruch 1 oder Anspruch 4, wobei das erste Metall aus der Gruppe, bestehend aus Bor (B), Niob (Nb), Zinn (Sn), Lanthan (La), Cobalt (Co), Europium (Eu), Gadolinium (Gd), Vanadium (V), Samarium (Sm), Praseodymium (Pr), Mangan (Mn), Iridium (Ir), Rhenium (Re) und Zink (Zn), ausgewählt ist.

14. Verfahren zum Herstellen eines magnetischen Aufzeichnungsmediums, umfassend den Schritt des nicht-reaktiven Sputterns von mindestens einer ersten Dünnfilmschicht zum Speichern von Daten über einem Substrat von einem Sputtertarget,
wobei das Sputtertarget Cobalt (Co), Platin (Pt), ein erstes Metall, ein zweites Metall und ein erstes Metalloxid umfaßt,
wobei die erste Dünnfilmschicht zum Speichern von Daten Cobalt (Co), Platin (Pt), ein stöchiometrisches zweites Metalloxid, umfassend das erste Metall, das zweite Metall und Sauerstoff (O), umfaßt
wobei während des Sputterns jedwede Nicht-Stöchiometrie des zweiten Metalloxids in der ersten Dünnfilmschicht zum Speichern von Daten zur Verwendung von Sauerstoff (O) von dem ersten Metalloxid in dem Sputtertarget kompensiert wird, und
wobei stöchiometrische Mengen von Sauerstoff innerhalb sauerstoffhaltiger Korngrenzen des magnetischen Aufzeichnungsmediums bereitgestellt werden.

15. Verfahren zum Herstellen eines magnetischen Aufzeichnungsmediums gemäß Anspruch 14, wobei das erste Metall und/oder das zweite Metall aus der Gruppe, bestehend aus Bor (B), Silicium (Si), Aluminium (Al), Tantal (Ta), Niob (Nb), Hafnium (Hf), Zirkonium (Zr), Titan (Ti), Zinn (Sn), Lanthan (La), Wolffram (W), Cobalt (Co), Yttrium (Y), Chrom (Cr), Cer (Ce), Europium (Eu), Gadolinium (Gd), Vanadium (V), Samarium (Sm), Praseodymium (Pr), Mangan (Mn), Iridium (Ir), Rhenium (Re), Nickel (Ni) und Zink (Zn), ausgewählt ist bzw. Sind.

16. Verfahren zum Herstellen eines magnetischen Aufzeichnungsmediums gemäß Anspruch 14,
wobei das erste Metalloxid weiter ein drittes Metall und Sauerstoff (O) umfaßt, und wobei das dritte Metall aus der Gruppe, bestehend aus Chrom (Cr), Bor (B), Cobalt (Co) und Platin (Pt), ausgewählt ist.

17. Verfahren zum Herstellen eines magnetischen Aufzeichnungsmediums gemäß Anspruch 14, wobei das Sputtertarget weiter Chrom (Cr) umfaßt.

18. Verfahren zum Herstellen eines magnetischen Aufzeichnungsmediums gemäß Anspruch 14, wobei das Sputtertarget weiter Bor (B) umfaßt.

19. Verfahren zum Herstellen eines magnetischen Aufzeichnungsmediums gemäß Anspruch 14, wobei das erste Metall und/oder das zweite Metall aus der Gruppe, bestehend aus Bor (B), Silicium (Si), Tantal (Ta), Niob (Nb), Titan (Ti), Zinn (Sn), Lanthan (La), Cobalt (Co), Chrom (Cr), Cer (Ce), Europium (Eu), Gadolinium (Gd), Vanadium (V), Samarium (Sm), Praseodymium (Pr), Mangan (Mn), Iridium (Ir), Rhenium (Re), Nickel (Ni) und Zink (Zn), ausgewählt ist bzw. sind.

20. Verfahren zum Herstellen eines magnetischen Aufzeichnungsmediums gemäß Anspruch 14, wobei das erste Metall und/oder das zweite Metall aus der Gruppe, bestehend aus Bor (B), Niob (Nb), Zinn (Sn), Lanthan (La), Cobalt (Co), Europium (Eu), Gadolinium (Gd), Vanadium (V), Samarium (Sm), Praseodymium (Pr), Mangan (Mn), Iridium (Ir), Rhenium (Re) und Zink (Zn), ausgewählt ist bzw. sind.

21. Verfahren zum Herstellen eines magnetischen Aufzeichnungsmediums, umfassend den Schritt des reaktiven Sputterns von mindestens einer ersten Dünnfilmschicht zum Speichern von Daten über einem Substrat von einem Sputtertarget in einer sauerstoffreichen Gasatmosphäre,
wobei das Sputtertarget Cobalt (Co), Platin (Pt) und ein erstes Einzelkomponenten-Metalloxid, umfassend ein erstes Metall und Sauerstoff (O), umfaßt,
wobei die erste Dünnfilmschicht zum Speichern von Daten Cobalt (Co), Platin (Pt) und ein stöchiometrisches zweites Metalloxid, umfassend das erste Metall und Sauerstoff (O), umfaßt,
wobei während des Sputterns jedwede Nicht-Stöchiometrie des zweiten Metalloxids in der ersten Dünnfilmschicht zum Speichern von Daten zur Verwendung von Sauerstoff (O) von der Sauerstoff-reichen Gasatmosphäre kompensiert wird, und
wobei stöchiometrische Mengen von Sauerstoff innerhalb sauerstoffhaltiger Korngrenzen des magnetischen Aufzeichnungsmediums bereitgestellt werden.

22. Verfahren zum Herstellen eines magnetischen Aufzeichnungsmediums gemäß Anspruch 21, wobei die Sauerstoff-reiche Atmosphäre mehr als 0 und bis zu 50 Vol.-% Sauerstoff (O) umfaßt.

23. Verfahren zum Herstellen eines magnetischen Aufzeichnungsmediums gemäß Anspruch 21, wobei das erste Metall aus der Gruppe, bestehend aus Bor (B), Silicium (Si), Aluminium (Al), Tantal (Ta), Niob (Nb), Hafnium (Hf), Zirkonium (Zr), Titan (Ti), Zinn (Sn), Lanthan (La), Wolfram (W), Cobalt (Co), Yttrium (Y), Chrom (Cr), Cer (Ce), Europium (Eu), Gadolinium (Gd), Vanadium (V), Samarium (Sm), Praseodymium (Pr), Mangan (Mn), Iridium (Ir), Rhenium (Re), Nickel (Ni) und Zink (Zn), ausgewählt ist.

24. Verfahren zum Herstellen eines magnetischen Aufzeichnungsmediums gemäß Anspruch 21, wobei das zweite Metalloxid weiter ein zweites Metall und Sauerstoff (O) umfaßt, und
wobei das zweite Metall aus der Gruppe, bestehend aus Chrom (Cr), Bor (B), Cobalt (Co) und Platin (Pt), ausgewählt ist.

25. Verfahren zum Herstellen eines magnetischen Aufzeichnungsmediums gemäß Anspruch 21, wobei das Sputtertarget weiter Chrom (Cr) umfaßt.

26. Verfahren zum Herstellen eines magnetischen Aufzeichnungsmediums gemäß Anspruch 21, wobei das Sputtergarget weiter Bor (B) umfaßt.

27. Verfahren zum Herstellen eines magnetischen Aufzeichnungsmediums gemäß Anspruch 21, wobei das erste Metall aus der Gruppe, bestehend aus Bor (B), Silicium (Si), Tantal (Ta), Niob (Nb), Titan (Ti), Zinn (Sn), Lanthan (La), Cobalt (Co), Chrom (Cr), Cer (Ce), Europium (Eu), Gadolinium (Gd), Vanadium (V), Samarium (Sm), Praseodymium (Pr), Mangan (Mn), Iridium (Ir), Rhenium (Re), Nickel (Ni) und Zink (Zn), ausgewählt ist.

28. Verfahren zum Herstellen eines magnetischen Aufzeichnungsmediums gemäß Anspruch 21, wobei das erste Metall aus der Gruppe, bestehend aus Bor (B), Niob (Nb), Zinn (Sn), Lanthan (La), Cobalt (Co), Europium (Eu), Gadolinium (Gd), Vanadium (V), Samarium (Sm), Praseodymium (Pr), Mangan (Mn), Iridium (Ir), Rhenium (Re) und Zink (Zn), ausgewählt ist.

29. Verfahren zum Herstellen eines magnetischen Aufzeichnungsmediums, umfassend den Schritt des reaktiven Sputterns von mindestens einer ersten Dünnfilmschicht zum Speichern von Daten über einem Substrat von einem Sputtertarget in einer Sauerstoff-reichen Gasatmosphäre,
wobei das Sputtertarget Cobalt (Co), Platin (Pt) und ein erstes Mehrfachkomponenten-Metalloxid, umfassend mindestens erste und zweite Metalle und Sauerstoff (O), umfaßt,
wobei die erste Dünnfilmschicht zum Speichern von Daten Cobalt (Co), Platin (Pt) und ein stöchiometrisches zweites Metalloxid, umfassend mindestens das erste Metall und Sauerstoff (O), umfaßt,
wobei während des Sputterns jedwede Nicht-Stöchiometrie des zweiten Metalloxids in der ersten Dünnfilmschicht zum Speichern von Daten zur Verwendung von Sauerstoff (O) von der Sauerstoff-reichen Gasatmosphäre kompensiert wird, und
wobei stöchiometrische Mengen von Sauerstoff innerhalb sauerstoffhaltiger Korngrenzen des magnetischen Aufzeichnungsmediums bereitgestellt werden.

30. Verfahren zum Herstellen eines magnetischen Aufzeichnungsmediums gemäß Anspruch 29, wobei die Sauerstoff-reiche Atmosphäre mehr als 0 und bis zu 50 Vol.-% Sauerstoff (O) umfaßt.

31. Verfahren zum Herstellen eines magnetischen Aufzeichnungsmediums gemäß Anspruch 29, wobei das erste Metall und/oder das zweite Metall aus der Gruppe, bestehend aus Bor (B), Silicium (Si), Aluminium (Al), Tantal (Ta), Niob (Nb), Hafnium (Hf), Zirkonium (Zr), Titan (Ti), Zinn (Sn), Lanthan (La), Wolfram (W), Cobalt (Co), Yttrium (Y), Chrom (Cr), Cer (Ce), Europium (Eu), Gadolinium (Gd), Vanadium (V), Samarium (Sm), Praseodymium (Pr), Mangan (Mn), Iridium (Ir), Rhenium (Re), Nickel (Ni) und Zink (Zn), ausgewählt ist bzw. sind.

32. Verfahren zum Herstellen eines magnetischen Aufzeichnungsmediums gemäß Anspruch 29, wobei das zweite Metalloxid weiter ein drittes Metall und Sauerstoff (O) umfaßt, und
wobei das dritte Metall aus der Gruppe, bestehend aus Chrom (Cr), Bor (B), Cobalt (Co) und Platin (Pt), ausgewählt ist.

33. Verfahren zum Herstellen eines magnetischen Aufzeichnungsmediums gemäß Anspruch 29, wobei das Sputtertarget weiter Chrom (Cr) umfaßt.

34. Verfahren zum Herstellen eines magnetischen Aufzeichnungsmediums gemäß Anspruch 29, wobei das Sputtertarget weiter Bor (B) umfaßt.

35. Verfahren zum Herstellen eines magnetischen Aufzeichnungsmediums gemäß Anspruch 29, wobei das erste Metall und/oder das zweite Metall aus der Gruppe, bestehend aus Bor (B), Silicium (Si), Tantal (Ta), Niob (Nb), Titan (Ti), Zinn (Sn), Lanthan (La), Cobalt (Co), Chrom (Cr), Cer (Ce), Europium (Eu), Gadolinium (Gd), Vanadium (V), Samarium (Sm), Praseodymium (Pr), Mangan (Mn), Iridium (Ir), Rhenium (Re), Nickel (Ni) und Zink (Zn), ausgewählt ist bzw. sind.

36. Verfahren zum Herstellen eines magnetischen Aufzeichnungsmediums gemäß Anspruch 29, wobei das erste Metall und/oder das zweite Metall aus der Gruppe, bestehend aus Bor (B), Niob (Nb), Zinn (Sn), Lanthan (La), Cobalt (Co), Europium (Eu), Gadolinium (Gd), Vanadium (V), Samarium (Sm), Praseodymium (Pr), Mangan (Mn), Iridium (Ir), Rhenium (Re) und Zink (Zn), ausgewählt ist bzw. sind.

## Revendications

1. Procédé de fabrication d'un système d'enregistrement magnétique, comprenant une étape consistant à pulvériser de manière non réactive au moins une première couche mince de film de stockage de données sur un substrat à partir d'une cible de pulvérisation,
dans lequel la cible de pulvérisation est constituée de cobalt (Co), de platine (Pt), d'un premier oxyde métallique comprenant en outre un premier métal et d'oxygène (O), et d'un second oxyde métallique,
dans lequel la première couche mince de film de stockage de données est constituée de cobalt (Co), de platine (Pt), et d'un troisième oxyde métallique stoechiométrique comprenant le premier métal et de l'oxygène (O),
dans lequel, pendant la pulvérisation, n'importe quelle non-stoechiométrie du troisième oxyde métallique dans la première couche mince de film de stockage de données est compensée pour l'utilisation de l'oxygène (O) provenant du second oxyde métallique dans la cible de pulvérisation, et
dans lequel les quantités stoechiométriques d'oxygène sont fournies dans les limites de grain contenant de l'oxyde du système d'enregistrement magnétique.

2. Procédé de fabrication d'un système d'enregistrement magnétique selon la revendication 1,
dans lequel le premier oxyde métallique est un oxyde métallique mono-composant.

3. Procédé de fabrication d'un système d'enregistrement magnétique selon la revendication 1,
dans lequel le premier métal est choisi dans le groupe constitué de bore (B), silicium (Si), aluminium (Al), tantale (Ta), niobium (Nb), hafnium (Hf), zirconium (Zr), titane (Ti), étain (Sn), lanthane (La), tungstène (W), cobalt (Co), yttrium (Y), chrome (Cr), cérium (Ce), europium (Eu), gadolinium (Gd), vanadium (V), samarium (Sm), praséodyme (Pr), manganèse (Mn), iridium (Ir), rhénium (Re), nickel (Ni) et zinc (Zn).

4. Procédé de fabrication d'un système d'enregistrement magnétique selon la revendication 1,
dans lequel le premier oxyde métallique est en outre constitué d'un troisième métal.

5. Procédé de fabrication d'un système d'enregistrement magnétique selon la revendication 4,
dans lequel le premier oxyde métallique est un oxyde métallique multi-composants.

6. Procédé de fabrication d'un système d'enregistrement magnétique selon la revendication 4,
dans lequel le premier métal est choisi dans le groupe constitué de bore (B), silicium (Si), aluminium (Al), tantale (Ta), niobium (Nb), hafnium (Hf), zirconium (Zr), titane (Ti), étain (Sn), lanthane (La), tungstène (W), cobalt (Co), yttrium (Y), chrome (Cr), cérium (Ce), europium (Eu), gadolinium (Gd), vanadium (V), samarium (Sm), praséodyme (Pr), manganèse (Mn), iridium (Ir), rhénium (Re), nickel (Ni) et zinc (Zn).

7. Procédé de fabrication d'un système d'enregistrement magnétique selon la revendication 1 ou la revendication 4,
dans lequel le second oxyde métallique est en outre constitué d'un second métal et d'oxygène (O), et
dans lequel le second métal est choisi dans le groupe constitué de chrome (Cr), bore (B), cobalt (Co) et platine (Pt).

8. Procédé de fabrication d'un système d'enregistrement magnétique selon la revendication 1 ou la revendication 4, dans lequel ledit second oxyde métallique comprend plus de 0 et jusqu'à 16 pour cent en moles d'oxygène (O).

9. Procédé de fabrication d'un système d'enregistrement magnétique selon la revendication 1 ou la revendication 4, dans lequel la cible de pulvérisation comprend en outre du chrome (Cr).

10. Procédé de fabrication d'un système d'enregistrement magnétique selon la revendication 1 ou la revendication 4, dans lequel la cible de pulvérisation comprend en outre du bore (B).

11. Procédé de fabrication d'un système d'enregistrement magnétique selon la revendication 1 ou la revendication 4, dans lequel le second oxyde métallique comprend un second métal et de l'oxygène (O) et le second métal est choisi dans le groupe constitué de bore (B), de cobalt (Co) et de platine (Pt).

12. Procédé de fabrication d'un système d'enregistrement magnétique selon la revendication 1 ou la revendication 4, dans lequel le premier métal est choisi dans le groupe constitué de bore (B), silicium (Si), tantale (Ta), niobium (Nb), titane (Ti), étain (Sn), lanthane (La), cobalt (Co), chrome (Cr), cérium (Ce), europium (Eu), gadolinium (Gd), vanadium (V), samarium (Sm), praséodyme (Pr), manganèse (Mn), iridium (Ir), rhénium (Re), nickel (Ni) et zinc (Zn).

13. Procédé de fabrication d'un système d'enregistrement magnétique selon la revendication 1 ou la revendication 4, dans lequel le premier métal est choisi dans le groupe constitué de bore (B), niobium (Nb), étain (Sn), lanthane (La), cobalt (Co), europium (Eu), gadolinium (Gd), vanadium (V), samarium (Sm), praséodyme (Pr), manganèse (Mn), iridium (Ir), rhénium (Re), et zinc (Zn).

14. Procédé de fabrication d'un système d'enregistrement magnétique, comprenant l'étape consistant à pulvériser de manière non réactive au moins une première couche mince de film de stockage de données sur un substrat à partir d'une cible de pulvérisation,
dans lequel la cible de pulvérisation comprend du cobalt (Co), du platine (Pt), un premier métal, un second métal et un premier oxyde métallique,
dans lequel la première couche mince de film de stockage de données comprend du cobalt (Co), du platine (Pt), et un second oxyde métallique stoechiométrique comprenant le premier métal, le second métal et l'oxygène (O),
dans lequel, pendant la pulvérisation, n'importe quelle non-stoechiométrie du second oxyde métallique dans la première couche mince de film de stockage de données est compensée pour l'utilisation de l'oxygène (O) provenant du premier oxyde métallique dans la cible de pulvérisation, et
dans lequel des quantités stoechiométriques d'oxygène sont fournies dans les limites de grain contenant un oxyde du système d'enregistrement magnétique.

15. Procédé de fabrication d'un système d'enregistrement magnétique selon la revendication 14,
dans lequel le premier métal et/ou ledit second métal sont choisis dans le groupe constitué de bore (B), silicium (Si), aluminium (Al), tantale (Ta), niobium (Nb), hafnium (Hf), zirconium (Zr), titane (Ti), étain (Sn), lanthane (La), tungstène (W), cobalt (Co), yttrium (Y), chrome (Cr), cérium (Ce), europium (Eu), gadolinium (Gd), vanadium (V), samarium (Sm), praséodyme (Pr), manganèse (Mn), iridium (Ir), rhénium (Re), nickel (Ni) et zinc (Zn).

16. Procédé de fabrication d'un système d'enregistrement magnétique selon la revendication 14,
dans lequel le premier oxyde métallique comprend en outre un troisième métal et de l'oxygène (O), et
dans lequel ledit troisième métal est choisi dans le groupe constitué de chrome (Cr), bore (B), cobalt (Co) et platine (Pt).

17. Procédé de fabrication d'un système d'enregistrement magnétique selon la revendication 14,
dans lequel la cible de pulvérisation comprend en outre du chrome (Cr).

18. Procédé de fabrication d'un système d'enregistrement magnétique selon la revendication 14,
dans lequel la cible de pulvérisation comprend en outre du bore (B).

19. Procédé de fabrication d'un système d'enregistrement magnétique selon la revendication 14,
dans lequel le premier métal et/ou le second métal sont choisis dans le groupe constitué de bore (B), silicium (Si), tantale (Ta), niobium (Nb), titane (Ti), étain (Sn), lanthane (La), cobalt (Co), chrome (Cr), cérium (Ce), europium (Eu), gadolinium (Gd), vanadium (V), samarium (Sm), praséodyme (Pr), manganèse (Mn), iridium (Ir), rhénium (Re), nickel (Ni) et zinc (Zn).

20. Procédé de fabrication d'un système d'enregistrement magnétique selon la revendication 14,
dans lequel le premier métal et/ou le second métal sont choisis dans le groupe constitué de bore (B), niobium (Nb), étain (Sn), lanthane (La), cobalt (Co), europium (Eu), gadolinium (Gd), vanadium (V), samarium (Sm), praséodyme (Pr), manganèse (Mn), iridium (Ir), rhénium (Re), et zinc (Zn).

21. Procédé de fabrication d'un système d'enregistrement magnétique, comprenant l'étape consistant à pulvériser de manière réactive au moins une première couche mince de film de stockage de données sur un substrat à partir d'une cible de pulvérisation dans une atmosphère gazeuse riche en oxygène,
dans lequel la cible de pulvérisation comprend du cobalt (Co), du platine (Pt), et un premier oxyde métallique mono-composant comprenant un premier métal et de l'oxygène (O),
dans lequel la première couche mince de film de stockage de données comprend du cobalt (Co), du platine (Pt), et un second oxyde métallique stoechiométrique comprenant le premier métal et de l'oxygène (O),
dans lequel, pendant la pulvérisation, n'importe quelle non-stoechiométrie du second oxyde métallique dans la première couche mince de film de stockage de données est compensée pour l'utilisation de l'oxygène (O) provenant de l'atmosphère gazeuse riche en oxygène, et
dans lequel des quantités stoechiométriques d'oxygène sont fournies dans des limites de grain contenant un oxyde du système d'enregistrement magnétique.

22. Procédé de fabrication d'un système d'enregistrement magnétique selon la revendication 21,
dans lequel l'atmosphère gazeuse riche en oxygène comprend plus de 0 et jusqu'à 50 pour cent en volume d'oxygène (O).

23. Procédé de fabrication d'un système d'enregistrement magnétique selon la revendication 21,
dans lequel le premier métal est choisi dans le groupe constitué de bore (B), silicium (Si), aluminium (Al), tantale (Ta), niobium (Nb), hafnium (Hf), zirconium (Zr), titane (Ti), étain (Sn), lanthane (La), tungstène (W), cobalt (Co), yttrium (Y), chrome (Cr), cérium (Ce), europium (Eu), gadolinium (Gd), vanadium (V), samarium (Sm), praséodyme (Pr), manganèse (Mn), iridium (Ir), rhénium (Re), nickel (Ni) et zinc (Zn).

24. Procédé de fabrication d'un système d'enregistrement magnétique selon la revendication 21,
dans lequel le second oxyde métallique comprend en outre un second métal et de l'oxygène (O), et
dans lequel le second métal est choisi dans le groupe constitué de chrome (Cr), bore (B), cobalt (Co) et platine (Pt).

25. Procédé de fabrication d'un système d'enregistrement magnétique selon la revendication 21,
dans lequel la cible de pulvérisation comprend en outre du chrome (Cr).

26. Procédé de fabrication d'un système d'enregistrement magnétique selon la revendication 21,
dans lequel la cible de pulvérisation comprend en outre du bore (B).

27. Procédé de fabrication d'un système d'enregistrement magnétique selon la revendication 21,
dans lequel le premier métal est choisi dans le groupe constitué de bore (B), silicium (Si), tantale (Ta), niobium (Nb), titane (Ti), étain (Sn), lanthane (La), cobalt (Co), chrome (Cr), cérium (Ce), europium (Eu), gadolinium (Gd), vanadium (V), samarium (Sm), praséodyme (Pr), manganèse (Mn), iridium (Ir), rhénium (Re), nickel (Ni) et zinc (Zn).

28. Procédé de fabrication d'un système d'enregistrement magnétique selon la revendication 21,
dans lequel le premier métal est choisi dans le groupe constitué de bore (B), niobium (Nb), étain (Sn), lanthane (La), cobalt (Co), europium (Eu), gadolinium (Gd), vanadium (V), samarium (Sm), praséodyme (Pr), manganèse (Mn), iridium (Ir), rhénium (Re), et zinc (Zn).

29. Procédé de fabrication d'un système d'enregistrement magnétique, comprenant l'étape consistant à pulvériser de manière réactive au moins une première couche mince de film de stockage de données sur un substrat à partir d'une cible de pulvérisation dans une atmosphère gazeuse riche en oxygène,
dans lequel la cible de pulvérisation comprend du cobalt (Co), du platine (Pt), et un premier oxyde métallique multi-composants comprenant au moins un premier et un second métaux, et de l'oxygène (O),
dans lequel la première couche mince de film de stockage de données comprend du cobalt (Co), du platine (Pt), et un second oxyde métallique stoechiométrique comprenant au moins le premier métal et de l'oxygène (O),
dans lequel, pendant la pulvérisation, n'importe quelle non-stoechiométrie du second oxyde métallique dans la première couche mince de film de stockage de données est compensée pour l'utilisation de l'oxygène (O) provenant de l'atmosphère gazeuse riche en oxygène, et
dans lequel des quantités stoechiométriques d'oxygène sont fournies dans des limites de grain contenant un oxyde du système d'enregistrement magnétique.

30. Procédé de fabrication d'un système d'enregistrement magnétique selon la revendication 29,
dans lequel l'atmosphère gazeuse riche en oxygène comprend plus de 0 et jusqu'à 50 pour cent en volume d'oxygène (O).

31. Procédé de fabrication d'un système d'enregistrement magnétique selon la revendication 29,
dans lequel le premier métal et/ou le second métal sont choisis dans le groupe constitué de bore (B), silicium (Si), aluminium (Al), tantale (Ta), niobium (Nb), hafnium (Hf), zirconium (Zr), titane (Ti), étain (Sn), lanthane (La), tungstène (W), cobalt (Co), yttrium (Y), chrome (Cr), cérium (Ce), europium (Eu), gadolinium (Gd), vanadium (V), samarium (Sm), praséodyme (Pr), manganèse (Mn), iridium (Ir), rhénium (Re), nickel (Ni) et zinc (Zn).

32. Procédé de fabrication d'un système d'enregistrement magnétique selon la revendication 29,
dans lequel le second oxyde métallique comprend en outre un troisième métal et de l'oxygène (O), et
dans lequel le troisième métal est choisi dans le groupe constitué de chrome (Cr), bore (B), cobalt (Co) et platine (Pt).

33. Procédé de fabrication d'un système d'enregistrement magnétique selon la revendication 29,
dans lequel la cible de pulvérisation comprend en outre du chrome (Cr).

34. Procédé de fabrication d'un système d'enregistrement magnétique selon la revendication 29,
dans lequel la cible de pulvérisation comprend en outre du bore (B).

35. Procédé de fabrication d'un système d'enregistrement magnétique selon la revendication 29,
dans lequel le premier métal et/ou le second métal sont choisis dans le groupe constitué de bore (B), silicium (Si), tantale (Ta), niobium (Nb), titane (Ti), étain (Sn), lanthane (La), cobalt (Co), chrome (Cr), cérium (Ce), europium (Eu), gadolinium (Gd), vanadium (V), samarium (Sm), praséodyme (Pr), manganèse (Mn), iridium (Ir), rhénium (Re), nickel (Ni) et zinc (Zn).

36. Procédé de fabrication d'un système d'enregistrement magnétique selon la revendication 29,
dans lequel le premier métal et/ou le second métal sont choisis dans le groupe constitué de bore (B), niobium (Nb), étain (Sn), lanthane (La), cobalt (Co), europium (Eu), gadolinium (Gd), vanadium (V), samarium (Sm), praséodyme (Pr), manganèse (Mn), iridium (Ir), rhénium (Re), et zinc (Zn).
